# EUROPÄISCHE PATENTSCHRIFT

(11) **EP 0 965 086 B1**
(45) Veröffentlichungstag und Bekanntmachung des Hinweises auf die Patenterteilung: **30.05.2001**
(21) Anmeldenummer: 98923993.4
(22) Anmeldetag: 07.03.1998
(51) Int. Cl.: G06F 13/42, G06F 13/40

(54) **COMPUTERPERIPHERIE-ZUSATZGERÄT**
COMPUTER PERIPHERAL ANCILLARY DEVICE
UNITE AUXILIAIRE POUR PERIPHERIQUE D'ORDINATEUR

(30) Priorität: 07.03.1997 DE 29704845 U
(43) Veröffentlichungstag der Anmeldung: 22.12.1999
(73) Patentinhaber: Freecom Technologies GmbH, 10997 Berlin (DE)
(72) Erfinder: BOTS, Pieter, D-10179 Berlin (DE)
(74) Vertreter: Omsels, Hermann-Josef
(86) Internationale Anmeldenummer: DE9800727
(87) Internationale Veröffentlichungsnummer: WO9839703

(56) Entgegenhaltungen:
- US-A- 4 032 211
- US-A- 4 588 249
- US-A- 4 812 847
- US-A- 5 276 443

## Beschreibung

Die Erfindung betrifft ein Zusatzgerät für die Verbindung von Computer-Peripheriegeräten und einem Personalcomputer, insbesondere über eine parallele Schnittstelle eines Personalcomputers, wobei das Zusatzgerät direkt an die parallele Schnittstelle des Personalcomputers anschließbar ist und eine gleichzeitige Mehrfachnutzung der parallelen Schnittstelle des Personalcomputers mit mindestens zwei externen Peripheriegeräten ermöglicht, wobei das Zusatzgerät eine Kleinststeuereinheit mit Steuerungsmitteln zur Erkennung, Umsetzung und Beaufschlagung der Parallelport-Signale in mit den externen Peripheriegeräten korrespondierende Signale aufweist und wobei das Zusatzgerät Teil eines Kabels zur Verbindung von Personalcomputer mit einem der Peripheriegeräte ist und daß das Kabel aus dem Gehäuse des Zusatzgerätes austritt, und daß das Zusatzgerät eine Doppelsteckverbindung aufweist.

Als Peripheriegeräte für Personalcomputer sind externe Datenspeicher oder Kommunikationsgeräte, wie CD-ROM-Laufwerke, Festplattenlaufwerke oder Modems bekannt, die in der Regel über die seriellen und parallelen Schnittstellen des Computers kommunizieren, wobei die Stromversorgung direkt durch einen Netzanschluß, über externe Netzteile und/oder in die Geräte integrierte Stromspeicher erfolgt. Insbesondere bei mobilen Mini- oder Kleincomputern, beispielsweise einem Laptop oder Notebook, sind die hierzu erhältlichen Peripheriegeräte in der Regel nicht nur unhandlich und schwer, sondern werden auch überwiegend über separate Netzteile mit Strom versorgt. Dabei sind die zur Versorgung der Peripheriegeräte dienenden Anschlußkabel äußerst unhandlich und meistens durch ihre freie Verlegung störend, abgesehen von der Tatsache, daß eine Steckdose in unmittelbarer Nähe meist nicht vorhanden ist.

Üblicherweise verfügen Personalcomputer über eine einzige parallele Schnittstelle (Parallelport), an die ein Drucker angeschlossen wird. Die Abmaße und Stecker/Buchsenbelegung der seriellen und parallelen Schnittstellen der Computer sind international normiert und einheitlich. Bei größeren Computern, wie beispielsweise ein Computer-Tower, macht es üblicherweise keine Schwierigkeiten, mehrere Stecker von Peripheriegeräten (Drucker, externe Laufwerke etc.) mit dem Tower zu verbinden, da hierzu ausreichend Platz vorhanden ist, um mehrere Anschlußmöglichkeiten an dem Computer selbst zu schaffen. Problematisch wird es jedoch, wenn diese Technik auf Kleinstcomputer wie Laptops oder Notebooks übertragen werden soll. Das wesentliche Kriterium eines Laptops ist es nun einmal, daß dieser möglichst klein und leicht ist. Dies bedeutet, daß ein Laptop selten größer als ein DIN A4-Blatt ist. Die Höhe, Länge und Breite der Laptops ist naturgemäß klein und soll auch klein gehalten werden. Dies reduziert die Möglichkeiten, auf der Rückseite des Laptops Anschlußmöglichkeiten für externe Peripheriegeräte zu schaffen, da es schlichtweg ein räumliches Problem gibt.

Die EP 0 618 525 A 2 beschreibt beispielsweise einen herkömmlichen portablen elektronischen Computer mit einem externen Peripheriegerät, nämlich einen CD-ROM-Laufwerk. Aus der Figur 2 dieser Druckschrift gehen die üblichen Dimensionen an der Rückseite eines Laptops mit den vorhandenen Anschlußmöglichkeiten hervor.

Wünschenswert wären daher Einrichtungen, die es ermöglichen, auch auf engerem Raum mehrere Anschlußmöglichkeiten zu schaffen. Die US-Patentschrift 4,183,606 beschreibt ganz grundsätzlich einen Mehrfachstecker, bestehend aus Einsteck-Klemmvorrichtungen zum Konnektieren mit anderen Kabeln. Diese Erfindung ist grundsätzlich nicht geeignet, im PC-Bereich verwendet zu werden. Die US 4,597,627 hingegen beschreibt einen Mehrfachstecker, der mehrere individuelle Kammern aufweist, in denen wiederum mehrere individuelle Kabel eingebracht werden können. Diese individuellen Kabel jedoch greifen individuell an jeweils korrespondierende Anschlußmöglichkeiten ein. Der Nachteil ist hier einerseits die Tatsache, daß jeweils individuelle Kabel verlegt werden, zum anderen, daß durch die Anzahl der individuellen Kabel die Ausmaße des Steckers sich vergrößern.

Letztlich beschreibt auch die US 4,919,621 einen Stecker, in dem mehrere Funktionalitäten vereinigt sind; im vorliegenden Fall jedoch handelt es sich um ein Endoskop, welches in den Stecker mit eingebracht wird, ohne die Ausmaße des Steckers wesentlich zu vergrößern, mithin eine andere Gattung.

Bekannt ist auch eine Einrichtung, die eine Mehrfachnut-zung des Parallel Ports ermöglicht, jedoch nicht unter Ausnutzung kleinsten Raumbedarfs. Die französische Firma ARCHOS S.A. -Z.A. Les Godets - 37 , rue des Petits Ruisseaux - 91370 Verrières-le-buisson bietet beispielsweise unter der Bezeichnung "ZIP-UP" ein Zusatzgerät zur Verbindung an der parallelen Schnittstelle eines Computers an, welches ebenfalls als Doppelstecker ausgebildet ist, bei dem jedoch das Kabel im rechten Winkel (90°) von dem Zusatzgerät abzweigt. Dieses Gerät ist nachteilig, da es wegen der sehr starren und dicken Kabel, die im 90° - Winkel abzweigen, unhandlich ist und nicht für den Einsatz an Kleinstcomputern geeignet ist. Eine Nutzung der daneben oder darüber oder darunterliegenden Anschlußmöglichkeiten wird durch dieses Gerät nicht ermöglicht.

Andere derartige Einrichtungen sind nachteilig, da sie zum einen nicht an der Schnittstelle direkt anzubringen sind, sondern innerhalb des Kabelverlaufs als Verzweigungspunkt angeordnet sind.

Letztlich beschreibt die US 4,812,847 einen Audioausgang für einen Rechner, bestehend aus einer Doppelsteckverbindung für die parallele Schnittstelle mit einem seitlich austretenden Kabel, welche einen, parallel an die Schnittstelle angeschlossenen D/A-Wandler enthält, dessen (Audio-)Ausgang an das Kabel angeschlossen ist.

Ausgehend von diesem Stand der Technik ist es Aufgabe der vorliegenden Erfindung, eine Verbindungsmöglichkeit zwischen einem Personalcomputer und externen anzuschließenden Peripheriegeräten zu schaffen, die es ermöglicht, eine am Computer vorhandene Schnittstelle gezielt für mehrere Peripheriegeräte gleichzeitig zu nutzen.

Gelöst wird diese Aufgabe durch die Merkmale des Anspruchs 1. Erfindungsgemäß ist vorgesehen, daß die Kleinststeuereinheit des Zusatzgerätesdie Ausgangsdaten von einem Druckerport eines Personalcomputers in einen gemultiplexten Datenbus umwandelt, und daß das Zusatzge-rät als Stecker für die parallele Schnittstelle ausgelegt ist, ohne daß die Ausmaße der Steckerverbindung oder des Zusatzgerätes selbst verändert werden. Der Kabelaustritt des Kabels aus dem Gehäuse liegt dabei innerhalb der Flucht der Längserstreckung des Gehäuses, wobei die Längserstreckung definiert ist durch die gedachte Verbindung der seitlichen Stellschrauben des Gehäuses zwischen der Doppelsteckverbindung des Gehäuses.

Die Erfindung ermöglicht es daher, daß ein Zusatzgerät direkt an die parallele Schnittstelle des Personalcomputers anschließbar ist und eine gleichzeitige Mehrfachnut-zung der parallelen Schnittstelle des Personalcomputers mit mindestens zwei externen Peripheriegeräten ermöglicht wird, wobei das Zusatzgerät eine Kleinststeuereinheit aufweist mit Steuerungsmitteln zur Erkennung, Umsetzung und Beaufschlagung der Parallelport-Signale in mit den externen Peripheriegeräten korrespondierende Signale. Durch diese Maßnahmen wird eine gleichzeitige Mehrfachnutzung der parallelen Schnittstelle eines Computerausgangs ermöglicht. Hierzu wird ein intelligentes Verbindungskabel zwischen einem Personalcomputer und Peripheriegerät verwendet, wobei das Verbindungskabel mit dem Zusatzgerät verbunden ist und an die parallele Schnittstelle der Druckerschnittstelle eines Personalcomputers angeschlossen wird. Innerhalb des Zusatzgerätes ist eine Kleinststeuereinheit vorgesehen, die die Parallelport-Signale als einerseits Druckersignale und andererseits Signale für das weitere externe Peripheriegerät erkennt, umsetzt und die externen Geräte mit diesen Daten gezielt beaufschlagt.

Besonderes Kennzeichen der Erfindung ist es, daß das Zusatzgerät als Stecker für die parallele Schnittstelle ausgelegt ist, ohne daß die Ausmaße der Steckerverbindung, respektive des Zusatzgerätes verändert werden. Ausgegangen wird dabei von den normierten Ausmaßen der Schnittstellen und den ebenfalls normierten Ausmaßen der entsprechenden Anschlußstecker.

Erfindungsgemäß ist vorgesehen, daß das Zusatzgerät als Doppelstecker ausgebildet ist, wobei die eine Seite des Steckers mit der parallelen Schnittstelle des Computers verbindbar ist und die andere Seite des Doppelsteckers mit der parallelen Schnittstelle des Computers selbst übereinstimmt, so daß hieran beispielsweise ein Drucker angeschlossen werden kann. Weiterhin ist erfindungsgemäß vorgesehen, daß mit der innerhalb des Zusatzgeräts be-findlichen Kleinststeuereinheit ein Verbindungskabel zu einem weiteren Peripheriegerät verbunden ist. Dabei sind die Ausmaße des Verbindungskabels derart klein und gering gehalten, daß das aus dem Gehäuse des Zusatzgeräts austretende Kabel die Außenmaße der Doppelsteckverbindung nicht vergrößert. Das Kabel ist von kleinem Durchmesser, biegsam und flexibel und verläßt das Gehäuse innerhalb der Flucht der Längserstreckung des Gehäuses, die von der Seitenwand des Gehäuses gebildet wird, oder seitlich am Gehäuse im wesentlichen aber innerhalb der Längserstrekkung. Dies hat den entscheidenden Vorteil, daß beispielsweise an der Rückseite eines Laptops mit den dort vorhandenen beschränkten räumlichen Abmessungen die übrigen Schnittstellen und Anschlußbuchsen nicht beeinträchtigt werden, so daß der Laptop nach wie vor in der ihm zugedachten Weise genutzt werden kann mit allen dafür routinemäßig vorgesehenen externen Peripheriegeräten, aber zusätzlich noch ein weiteres Gerät zum Einsatz kommen kann.

Diese Erfindung ermöglicht es auch, mehrere derartige Zusatzgeräte mit Verbindungskabeln an einem Computer anzuschließen, so daß hierdurch eine Vielzahl von Geräten als neue, externe Peripheriegeräte zur Verfügung stehen. Der große Vorteil besteht darin, daß der Drucker nicht - wie bei anderen externen Geräten üblich - über ein zweites Kabel umständlich an das externe Laufwerk angeschlossen werden muß. Dies bedeutet, daß ein Stecker weniger am Laufwerk benötigt wird. Bei dem erfindungsgemäßen intelligenten Kabel befindet sich der durchgeschleifte Printerport direkt am Stecker, und der Druckeranschluß bleibt da, wo er hingehört, nämlich direkt am Rechner.

Vorteilhaft an der Erfindung ist weiterhin, daß der an sich spannungslose Parallelport des Personalcomputers sowohl zur Datenübertragung zum Peripheriegerät als auch zur Datenübertragung an einen Drucker genutzt werden kann. Dies ist dadurch erreichbar, daß die Steuereinheit des Zusatzgerätes auf einen äußerst minimalen Stromverbrauch ausgelegt ist, so daß die Strombelastung des Peri-pheriegerätes, die das Zusatzgerät versorgt, sehr gering ist. Peripheriegeräte verfügen oftmals über interne Stromspeicher/Akkumulatoren, so daß diese bevorzugte Aus-führungsform für das Peripheriegerät selbst bzw. die Verbrauchsdaten des Peripheriegerätes günstig ist.

Damit vereint das Verbindungskabel in vorteilhafter Weise die sonst üblichen Verbindungskabel zur Datenübertragung und Stromversorgung zu einem Peripheriegerät, beispiels-weise einem Hochgeschwindigkeits-Laufwerk einer CD-ROM oder DVD (Digital-Video-Disk) Einheit, so daß nicht nur das Peripheriegerät in unmittelbarer Nähe des Computers plaziert werden kann, sondern auch somit die lästige und behindernde Kabelverlegung elegant auf Minimalabstände reduziert wird. Bevorzugt zur Verbindung mit dem Periphe-riegerät ist ein 26-poliges Kabel, da dieses ausreichende Leistungskapazität sowohl für die Datenübertragung entsprechend der Belegung der Anschlüsse/Schnittstellen, als auch für die Stromversorgung der Steuereinheit des Kabels zur Verfügung stellt und besonders auf kleinstem Raum die Anordnung des Computersteckerteiles mit dem Druckeranschlußteil löst.

Das Kabel selbst, welches als FREECOM IQ-Kabel bezeichnet. wird, zeichnet sich also durch hohe mechanische Scabilität und Biegsamkeit aus. Seine Gesamtlänge beträgt 100 cm. Das FREECOM IQ-Kabel unterstützt DOS/Windows 3.1x, Windows 95 und Windows NT 4.0. Die Datenübertragungsrate liegt bei bis zu 1.200 kB/s (im EPP-Modus). Mit dem erfindungsgemäßen Zusatzgerät/Kabel ist es möglich, daß der Drucker direkt am Rechner angeschlossen bleibt und daß Drucken auch bei ausgeschaltetem oder nicht angeschlossenem externen Laufwerk möglich ist.

Weitere vorteilhafte Maßnahmen sind in den übrigen Unteransprüchen enthalten. Die Erfindung ist in den anliegenden Zeichnungen dargestellt und wird nachfolgend näher beschrieben; es zeigt:
- **Figur 1**: eine schematische Anordnung eines Personalcomputers, eines Drukkers und eines externen CD-ROM-Laufwerkes mit erfindungsgemäßer Verbindung und Zusatzgerät;
- **Figur 2**: eine Draufsicht auf das erfindungsgemäße Zusatzgerät einschließlich Verbindungskabel in schemati-scher Darstellung;
- **Figur 3**: eine Draufsicht auf ein erfindungsgemäßes Zusatzgerät mit Verbin-dungskabel.

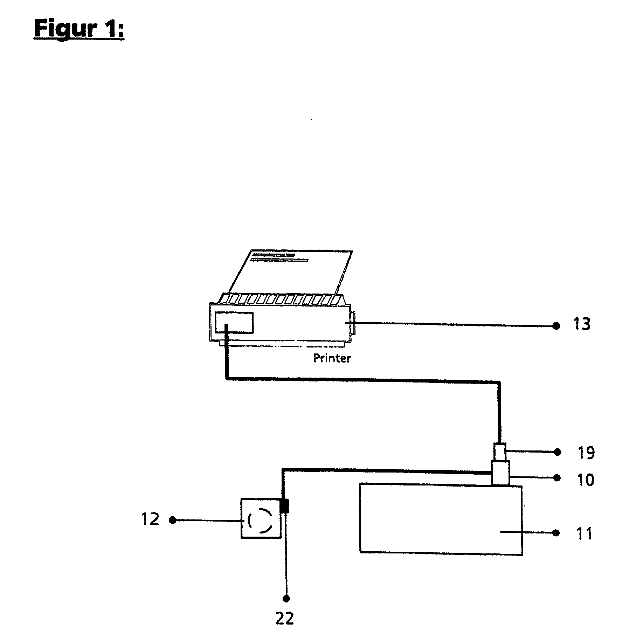

In Figur 1 ist schematisch dargestellt, wie das Peripherie-Zusatzgerät 10 zwischen einem Personalcomputer 11 und einem peripheren Laufwerk 12 als intelligentes Verbindungskabel angeordnet ist. Mit dem Zusatzgerät 10 ist ein Anschlußstecker 19 des Verbindungskabels des Druckers 13 verbunden. Das Zusatzgerät 10 ist an der parallelen Schnittstelle an der Rückseite eines Personalcomputers 11, beispielsweise einem Laptop, angeordnet.

In der Figur 1 ist in Detailzeichnung das Zusatzgerät 10 einschließlich des Verbindungskabels 15 dargestellt. Das Zusatzgerät 10 ist als Doppelstecker ausgebildet und verbindet somit die parallele Schnittstelle des Computers mit der Steckverbindung 17 und über die Steckverbindung 18 den Drucker 13 selbst mit der parallelen Schnittstelle. Das Zusatzgerät wirkt daher in diesem Punkt wie ein Adapter. Das Zusatzgerät 10 besteht aus einem Gehäuse 16 und endseitigen Stellschrauben bzw. Schraubverbindungen 20, die zum Fixieren an der Schnittstelle des Computers gedacht sind bzw. zum Fixieren des Anschlußkabels 19 des Druckers 13.

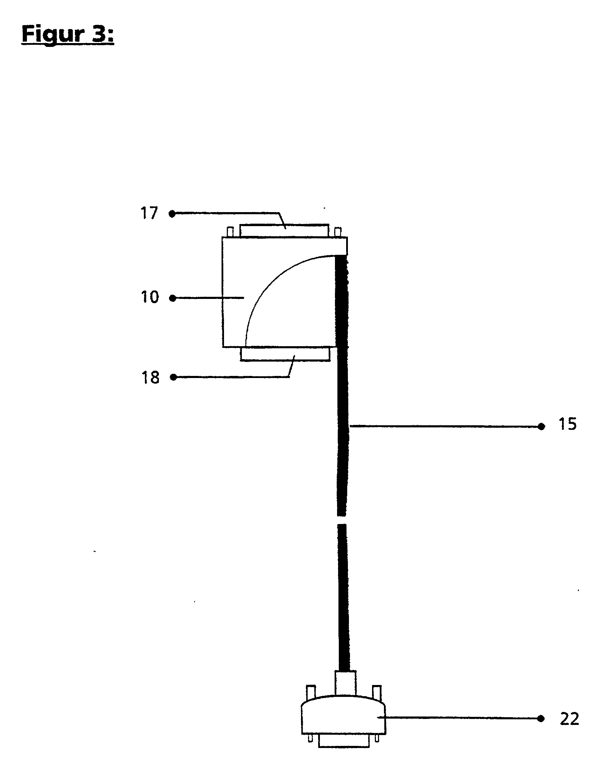

Im Innern des Zusatzgerätes 10 ist eine Steuereinheit 14 angeordnet, die zur Datenübertragung, Erkennung und Umsetzung von Signalen aus dem Parallelport und zur Beaufschlagung eines weiteren Peripheriegerätes 12 dient. Mit dieser Steuereinheit ist ein Verbindungskabel 15 verbunden, welches mit besagtem weiteren Peripheriegerät 12 über einen Stecker 22 (vgl. Fig. 3) verbunden ist. Über die Steuereinheit 14 werden daher die Signale einerseits an das Peripheriegerät 13 weitergegeben, zum anderen aber auch gezielt an das Peripheriegerät 12. Die Steuereinheit 14 ist dazu in der Lage, die ankommenden und eingehenden, sowie ausgehenden Signale zu differenzieren und gezielt dem jeweiligen Empfänger zuzuordnen.

Das Gehäuse 16 des Zusatzgerätes 10 entspricht in seinen Abmessungen mit einer Breite von 55 mm, einer Länge von 68 mm und einer Höhe von 16,5 mm dabei fast den Standardabmessungen bekannter Steckverbindungen und gewährleistet durch den intelligent gestalteten Kabelaustritt und den verschiedenen Kabelführungsmöglichkeiten am Gehäuse 16 entlang eine uneingeschränkte Nutzung weiterer Kabelanschlüsse am Personalcomputer, ohne diese zu behindern bzw. ohne daß diese sich selbst behindern und damit die Nutzungsmöglichkeiten einschränken (vergleiche Figur 3).

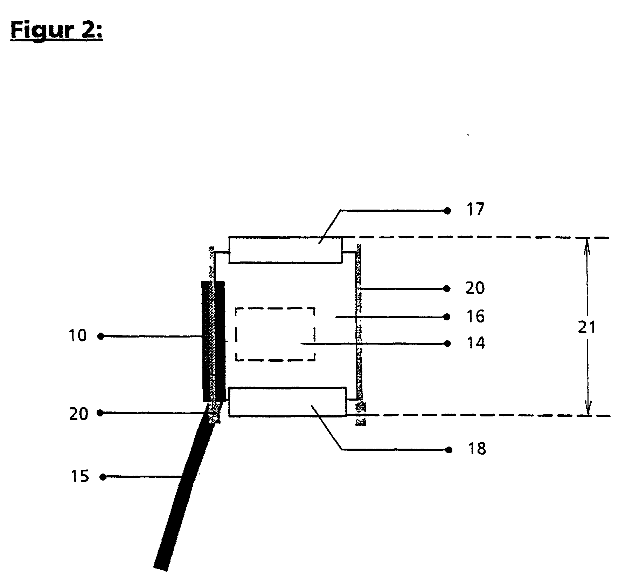

Das Verbindungskabel 15 verläßt durch einen - nicht näher dargestellten - Ausgang das Gehäuse 11 des Zusatzgerätes 10 in einer Weise, die die Außenmaße des gesamten Gehäuses des Zusatzgerätes 10 nicht verändern. Dies bedeutet, daß die Außenmaße des Zusatzgerätes, welches in den üblichen Abmaßungen eines herkömmlichen und genormten Stekkers für einen Anschluß an eine parallele Schnittstelle ausgestaltet ist, nicht verändert werden. Die Ausmaße werden im Zweifel durch die direkten Maße des Gehäuses 11 bestimmt, werden aber erweitert durch die von dem Gehäuse 11 abgehenden Halteeinrichtungen für die Stellschrauben 20. Das von dem Zusatzgerät 10 abzweigende Verbindungskabel 15 hält sich in diesen Abmessungen, wie aus den Figuren 2 und 3 hervorgeht. Das Kabel 15 ist von kleinem Durchmesser, biegsam und flexibel und verläßt das Gehäuse 16 seitlich im oberen Teil des Gehäuses 16 im wesentlichen in der Längserstreckung 21, die von der Seitenwand/Stellschrauben 20 des Gehäuses gebildet wird (Fig. 2). Erst im oberen Drittel des Zusatzgerätes 10 zweigt das Verbindungskabel 15 tatsächlich von dem Anschlußstekker ab und ermöglicht daher, in unmittelbarer Nachbarschaft zu dem Zusatzgerät 10 eine herkömmliche andere Schnittstelle oder Anschlußstelle/Buchse am Computer (ne-ben oder direkt über oder unter dem Parallel Port) mit: einem entsprechenden Stecker zu belegen, ohne daß es zu räumlichen Kollisionen kommt.

Figur 3 zeigt jedoch eine bevorzugte Ausführungsform, bei der das Kabel 15 direkt über einer der Stellschrauben 2C am Stecker 17 zum Parallel Port des Computers abzweigt, ohne daß die Ausmaße des Zusatzgerätes 10 verändert werden, da das Kabel 15 in der Flucht der Längserstreckung 21 liegt.

Bei dem Peripheriegerät 12 kann es sich beispielsweise um ein Laufwerk bzw. ein Hochgeschwindigkeits-Laufwerk als CD-ROM oder DVD (Digital Video Disk) -Gerät zum Abrufen von gespeicherten Daten oder andererseits zum Schreiben und Speichern handeln. Eine Spannungsversorgung an diesem Gerät kann durch integrierte Stromspeicher, wie Akkumulatoren, gewährleistet werden.

Das Zusatzgerät 10 besteht vorzugsweise aus einem 26-poligen Kabel 15 welches in das Gehäuse 16 - wie beschrieben - mündet. Dieses Gehäuse 16 weist zunächst einen, auf den mit der üblichen Belegung für eine parallele Schnittstelle des Personalcomputers 11 passenden, 25-polige Steckerverbindung 17 auf. Hierzu gegenüberliegend ist - als Doppelsteckverbindung - das mit dem Computer 11 und dem Parallelport entsprechende Buchsenteil 18 angeordnet.

Der Spannungsanschluß der Versorungsspannung an der Steuereinheit 14 ist durch das Kabel 15 gegeben, wobei die Steckverbindung am Kabel 15 für ein Laufwerk 12 nicht näher dargestellt ist.

Mithin löst das erfindungsgemäße intelligente Peripherie-Zusatzgerät 10 das Problem der Mehrfachnutzung eines Parallelports in baulich kleinster und nutzbarer Art und Weise.

### Bezugszeichen

- 10: Zusatzgerät
- 11: Personalcomputer
- 12: Peripheriegerät / Laufwerk
- 13: Peripheriegerät / Drucker
- 14: Steuereinheit
- 15: Verbindungskabel
- 16: Gehäuse zu 10
- 17: Steckverbindung
- 18: Steckverbindung
- 19: Anschlußstecker von 13
- 20: Stellschrauben zu 16
- 21: Längserstreckung des Gehäuses 16
- 22: Steckverbindung zum Peripheriegerät 12

## Patentansprüche

1. Zusatzgerät für die Verbindung von Computer-Peripheriegeräten und einem Personalcomputer, insbesondere über eine parallele Schnittstelle eines Personalcomputers, wobei das Zusatzgerät (10) direkt an die parallele Schnittstelle des Personalcomputers anschließbar ist und eine gleichzeitige Mehrfachnutzung der parallelen Schnittstelle des Personalcomputers (11) mit mindestens zwei externen Peripheriegeräten (12, 13) ermöglicht, wobei das Zusatzgerät (10) eine Kleinststeuereinheit (14) mit Steuerungsmitteln zur Erkennung, Umsetzung und Beaufschlagung der Parallelport-Signale in mit den externen Peripheriegeräten (12, 13) korrespondierende Signale aufweist und wobei das Zusatzgerät (10) Teil eines Kabels (15) zur Verbindung von Personalcomputer (11) mit einem der Peripheriegeräte (12) ist und daß das Kabel (15) aus dem Gehäuse (16) des Zusatzgerätes (10) austritt, und daß das Zusatzgerät (10) eine Doppelsteckverbindung (17, 18) aufweist, **dadurch gekennzeichnet, daß**
- die Kleinststeuereinheit (14) des Zusatzgerätes (10) die Ausgangsdaten von einem Druckerport eines Personalcomputers (11) in einen gemultiplexten Datenbus umwandelt,
- und daß das Zusatzgerät (10) als Stecker für die parallele Schnittstelle ausgelegt ist, ohne daß die Ausmaße der Steckerverbindung oder des Zusatzgerätes (10) selbst verändert werden,
- wobei der Kabelaustritt des Kabels (15) aus dem Gehäuse (16) innerhalb der Flucht der Längserstreckung (21) des Gehäuses (16) liegt, die definiert ist durch die gedachte Verbindung der seitlichen Stellschrauben (20) des Gehäuse, (16) zwischen der Doppelsteckverbindung (17, 18) des Gehäuses (16).

2. Zusatzgerät nach Anspruch 1, dadurch gekennzeichnet, daß das Zusatzgerät (10) Teil eines Kabels (15) zur Verbindung von Personalcomputer (11) mit einem der Peripheriegeräte (12) ist, welches gleichzeitig die Stromversorgung der Kleinststeuereinheit (14) darstellt.

3. Zusatzgerät nach Anspruch 1, dadurch gekennzeichnet, daß das Zusatzgerät (10) in einem Gehäuse (16) beherbergt ist, welches im wesentlichen die Ausmaße eines standardisierten Parallelport-Anschlusses aufweist und als Doppelsteckverbindung (17, 18) ausgestaltet ist, wobei über die Doppelsteckverbindung (18) das nicht mit dem Verbindungskabel (15) verbundene Peripheriegerät (13) verbindbar ist.

4. Zusatzgerät nach Anspruch 1, dadurch gekennzeichnet, daß das Verbindungskabel (15) mit der Steuereinheit (14) des Zusatzgerätes (10) verbunden ist.

5. Zusatzgerät nach Anspruch 1, dadurch gekennzeichnet, daß das Verbindungskabel (15) und der Eingang an dem Peripheriegerät (12) eine 26-polige, korrespondierende Stecker-/Buchsenbelegung aufweist.

6. Zusatzgerät nach einem oder mehreren der vorhergehenden Ansprüche, dadurch gekennzeichnet, daß das Verbindungskabel (15) und die Steuereinheit (14) des Zusatzgerätes (10) eine Hochgeschwindigkeitsübertragung zwischen dem Computer (1) und den Peripheriegeräten (12, 13) gewährleisten.

## Claims

1. Supplementary device for connecting computer peripheral devices and a personal computer, in particular by means of the parallel interface of a personal computer, in which the supplementary device (10) can be connected directly to the parallel interface of the personal computer and permits simultaneous multiple use of the parallel interface of the personal computer (11) with at least two external peripheral devices (12, 13), whereby the supplementary device (10) contains a micro-control unit (14) with the means of control necessary for the identification of the parallel port signals, and their transfer and application to signals corresponding with the external peripheral devices (12, 13), whereby the supplementary device (10) forms part of a cable (15) for connecting the personal computer (11) to one of the peripheral devices (12), and that the cable (15) exits from the housing (16) of the supplementary device (10), and that the supplementary device (10) is provided with a double socket connection (17, 18), **characterised by the fact that**
- the micro-control unit (14) of the supplementary device (10) converts the output data from the printer port of a personal computer (11) in a multiplex data bus,
- and that the supplementary device (10) is designed in the form of a plug for the parallel interface, without requiring any alteration to the dimensions of the socket connection or the supplementary device (10) itself,
- whereby the cable (15) exiting from the housing (16) runs along the line of the longitudinal extension (21) of the housing (16), which is defined by the intended connection by the lateral adjustment screws (20) of the housing (16) between the double plug connection (17, 18) of the housing (16).

2. Supplementary device in accordance with Claim 1, characterised by the fact that the supplementary device (10) forms part of a cable (15) for connecting the personal computer (11) with one of the peripheral devices (12), which at the same time provides the power supply to the micro-control unit (14).

3. Supplementary device in accordance with Claim 1, characterised by the fact that the supplementary device (10) is enclosed in a housing (16), which largely displays the same dimensions as those of a standardised parallel port connection and is designed in the form of a double plug connection (17, 18), whereby the double plug connection (18) can be connected to the peripheral device (13) which is not connected by means of the connecting cable (15).

4. Supplementary device in accordance with Claim 1, characterised by the fact that the connecting cable (15) is connected to the control unit (14) of the supplementary device (10).

5. Supplementary device in accordance with Claim 1, characterised by the fact that the connecting cable (15) and the input to the peripheral device (12) show a 26 pin corresponding plug/socket configuration.

6. Supplementary device in accordance with one or more of the claims listed above, characterised by the fact that the connecting cable (15) and the control unit (14) of the supplementary device (10) ensure high speed transmission between the computer (1) and the peripheral devices (12, 13).

## Revendications

1. Appareil accessoire pour la connexion de périphériques à un PC, en particulier par une interface parallèle d'un PC, l'appareil accessoire (10) pouvant être directement connecté à l'interface parallèle du PC ce qui permet une utilisation multiple et simultanée de l'interface parallèle du PC (11) avec au moins deux périphériques externes (12, 13), l'appareil accessoire (10) présentant une unité de contrôle miniature (14) avec commandes pour la reconnaissance, l'alimentation et la conversion des signaux du port parallèle en signaux correspondants avec les périphériques externes (12, 13), l'appareil accessoire (10) étant partie intégrante d'un câble (15) de connexion entre un PC (11) et un des périphériques (12), ce câble (15) sort du boîtier (16) de l'appareil accessoire (10) qui possède une double prise de connexion (17, 18), **caractérisé par le fait que :**
- l'unité de contrôle miniature (14) de l'appareil accessoire (10) transforme les données de sorties du port imprimante d'un PC (11) en un bus de données multiplexé,
- l'appareil accessoire (10) est conçu comme une prise pour l'interface parallèle, sans que les dimensions de la prise de connexion ou encore de l'appareil accessoire (10) ne soient elles-mêmes modifiées,
- la sortie du câble (15) hors du boîtier (16) se trouve à l'intérieur du corps longiforme (21) du boîtier (16), qui est défini par la connexion prévue des vis ajustables (20) latérales du boîtier (16) entre la double prise de connexion (17, 18) du boîtier (16).

2. Appareil accessoire d'après la revendication 1, caractérisé par le fait que l'appareil accessoire (10) fait partie intégrante du câble de connexion (15) entre un PC (11) et un des périphériques (12), lequel signale en même temps l'alimentation en électricité de l'unité de contrôle miniature (14).

3. Appareil accessoire d'après la revendication 1, caractérisé par le fait que l'appareil accessoire (10) est logé dans un boîtier (16), lequel a les mesures d'un raccord port parallèle standard et est équipé d'une double prise de connexion (17, 18), grâce à cette double prise de connexion (18), le périphérique (13) qui n'est pas connecté avec le câble de connexion (15) est désormais connectable.

4. Appareil accessoire d'après la revendication 1, caractérisé par le fait que le câblé de connexion (15) est raccordé à l'unité de contrôle (14) de l'appareil accessoire (10).

5. Appareil accessoire d'après la revendication 1, caractérisé par le fait que le câble de connexion (15) et l'entrée du périphérique (12) sont équipés réciproquement d'une fiche mâle et d'une fiche femelle à 26 pôles.

6. Appareil accessoire d'après une ou plusieurs des revendications précédentes, caractérisé par le fait que le câble de connexion (15) et l'unité de contrôle (14) de l'appareil accessoire (10) assurent une transmission à grande vitesse entre l'ordinateur (1) et les périphériques (12, 13).
